Europäisches Patentamt

European Patent Office

Office européen des brevets

(11) Publication number: **0 366 382**
**A1**

## (12) EUROPEAN PATENT APPLICATION

(21) Application number: **89310877.9**

(22) Date of filing: **23.10.89**

(51) Int. Cl.⁵: **C08K 3/34 , C08L 77/00 , C08L 77/02 , B65D 6/02**

(30) Priority: **24.10.88 GB 8824854**

(43) Date of publication of application:
**02.05.90 Bulletin 90/18**

(84) Designated Contracting States:
**AT BE CH DE ES FR GB GR IT LI LU NL SE**

(71) Applicant: **DU PONT CANADA INC.**
**Box 2200 Streetsville Postal Station**
**Mississauga Ontario L5M 2H3(CA)**

(72) Inventor: **Sahi, Ash Kumar**
**RR**
**Ontario KOA 2NO(CA)**

(74) Representative: **Harrison, David Christopher et al**
**MEWBURN ELLIS 2 Cursitor Street**
**London EC4A 1BQ(GB)**

(54) **Polyamide food and beverage cans.**

(57) Shelf stable food and beverage containers, having a plastic body, are disclosed. The body is injection moulded or injection blow moulded and made from a blend comprising a) from 60 to 99 wt.% of a nylon selected from the group consisting of i) a nylon made from an aliphatic dicarboxylic acid and an aliphatic diamine, each having from 6 to 24 carbon atoms, ii) a nylon made from an aliphatic aminoacid having from 6 to 24 carbon atoms, iii) an amorphous nylon and iv) mixtures thereof, and b) from 1 to 40 wt.% of a filler and optionally up to 20 wt.% of a compatibilized olefin-based modifying polymer. The filler is preferably a platy material, e.g. mica, and the compatibilized polymer is preferably polyethylene grafted with maleic anhydride, or an ethylene/methacrylic acid copolymer. The container may be lidded with a metallic end closure on a high speed canning line. Some containers may be retorted.

Xerox Copy Centre

## POLYAMIDE FOOD AND BEVERAGE CANS

The present invention relates to shelf stable food and beverage containers which have at least one hermetically sealed end closure, particularly shelf stable food and beverage cans which have at least one hermetically sealed metal end closure.

It is known to sell foods, e.g. meals, in lidded trays, to consumers with the intention that the food in the lidded trays may be heated or cooked in a conventional, convection oven or a microwave oven. Such trays are often known in the trade as dual-ovenable trays. Most commonly such dual-ovenable trays are made by thermoforming sheets of crystallizable polyethylene terephthalate. More recently, polyamides have been used. Canadian Patent 1 022 356 to Duffield et al., which issued 1977 December 13, discloses production of substantially inflexible containers from polyamides using continuous melt thermoforming techniques. European Patent Publication No. 0 229 527 to D.L.Winthrop, which was published 1987 July 22, discloses injection moulding of blends of nylon and a compatible olefin-based polymer to form dual-ovenable containers. Such dual-ovenable trays are covered with metallic foil, plastic film or rigid or semi-rigid lids. With trays of nylon, crystallized polyethylene terephthalate (CPET) or similarly stiff plastic materials, it is often desirable to use thermoformed lids with a snap-fit or to use a foil lid crimped to the tray, because it is not easy to seal materials thereto, cheaply. Another type of lid may have a vacuum-induced and thermally-set crimp as disclosed in European Patent Application 88302037.2 to Du Pont Canada Inc. which was filed 1988 March 9. None of the food packages made using such dual-ovenable trays are believed to be shelf stable.

It is also known to package food and beverages in tin, steel, aluminium and plastic composite cans. The tin and steel cans have three hermetic seals. One is a longitudinal side seam in the body of the can and the others are seals formed by so-called double seams between the metal end closures and body of the can. An aluminium can may have the same three hermetic seals, but generally only has one by virtue of the fact that there is only one end closure because the body is formed to include an integral end. Plastic composite cans also only have one hermetic seal. The bodies of the plastic composite cans have heretofore generally been made from polypropylene sheet which has been coated with an oxygen barrier material or from a coextruded sheet of polypropylene and a barrier material. An example of such a coextruded sheet is polyvinylidene chloride or ethylene/vinyl alcohol sandwiched between layers of polypropylene. The plastic cans may be made by one of several thermoforming processes, for example a continuous melt thermoforming process. Thermoforming processes are known to be wasteful of materials and therefore tend to be relatively expensive.

It is also known to package foods and beverages in bottles, particularly glass or plastic bottles with screw cap lids.

U.S. Patent 4 684 553 which issued 1987 August 4 to Sasaki et al. discloses a transparent can made of plastics material and includes a layer of silicon oxide deposited by vacuum evaporation or sputtering. The silicon oxide is deposited on a film of biaxially oriented polypropylene, polyester, nylon, polycarbonate or polystyrene. The can is retortable.

U.S. Patent 4 642 252 which issued 1987 February 10, also to Sasaki et al. discloses a body for a can formed from a spirally wound layer of uniaxially stretched film of crystalline high molecular weight polymer. The can body is particularly useful for making cans for carbonated beverages such as cola, cider and beer.

Canadian Patent 1 224 730 which issued 1987 July 28 to Depolo et al. discloses a container made from a biorientable type plastic which is blow moulded to form a "bottle blank" which is then trimmed to form a can body.

Japanese Kokai 59 225 932 which was published 1984 December 18 to Mitsui Petrochemical Industries KK discloses a container for drinks, i.e. a can, blow moulded from a preformed hollow piece of thermoplastic, especially polyester.

European Patent Application 126 575 published 1984 November 28 to McLaughlin et al. discloses thermoplastic bottles and cans produced by spin welding top and bottom portions to a coextruded body portion. The body portion comprises an inner and an outer layer, each made from polyester, polyvinyl chloride, polystyrene, polypropylene or polyethylene, and a barrier layer between these two layers consisting of ethylene/vinyl acetate copolymer, polyvinylalcohol, styrene-acrylonitrile or polyvinylidene chloride.

Japanese Kokai 58 187 342 published 1983 November 1 to A. Kishimoto discloses a plastic can for retort sterilization which comprises a seamless olefin resin body with an external gas barrier layer of a metal foil laminate.

Japanese Kokai 58 001 643 published 1983 January 7 to A. Kishimoto discloses a plastic can which has a body made of a laminate consisting of a metal foil with a protective film on its inner surface, and a plastic layer on the outside. The plastic layer may be of a thermoplastic resin selected from an olefinic, a vinyl chloride, a styrene, a polyester, a polycarbonate or a polyamide resin.

Many of the aforementioned plastic cans tend to be expensive to produce and the present invention seeks to alleviate such disadvantage.

Accordingly the present invention provides an injection moulded or injection blow moulded food or beverage container adapted to have one or two end closures hermetically sealed thereto, said container being made from a blend comprising a) from 60 to 99 wt.% of a nylon selected from the group consisting of i) a nylon made from an aliphatic dicarboxylic acid and an aliphatic diamine, each having from 6 to 24 carbon atoms, ii) a nylon made from an aliphatic aminoacid having from 6 to 24 carbon atoms, iii) an amorphous nylon and iv) mixtures thereof, and b) from 1 to 40 wt.% of a filler and optionally up to 20 wt.% of a compatibilized olefin-based modifying polymer.

In a preferred embodiment the nylon is nylon 66.

In another embodiment the filler is a lamellar filler and more preferably is mica.

In a preferred embodiment the container has a wall thickness of from 0.3 to 1.2 mm.

In another embodiment the container is tubular and adapted to have a metal end closure hermetically sealed to each end of said tube.

In yet another embodiment the container is adapted to be hermetically sealed with an end closure which is a metal can lid with double seamed rim.

In a further embodiment the container has nesting walls and is closed at one end, the other end being open and adapted to have an end closure hermetically sealed thereto.

In another embodiment the container has a non-metallic moisture barrier layer on at least one of the inside and outside of the container. The moisture barrier layer is preferably a urethane or polyvinylidene chloride coating.

The invention also provides a shelf stable food package consisting of food or beverage contained in a plastic-bodied container comprising an injection moulded or injection blow moulded body, having one or two open ends, each open end having an end closure hermetically sealed thereto, said body being made from a blend comprising a) from 60 to 99 wt.% of a nylon selected from the group consisting of i) a nylon made from an aliphatic dicarboxylic acid and an aliphatic diamine, each having from 6 to 24 carbon atoms, ii) a nylon made from an aliphatic aminoacid having from 6 to 24 carbon atoms, iii) an amorphous nylon and iv) mixtures thereof, and b) from 1 to 40 wt.% of a filler and optionally up to 20 wt.% of a compatibilized olefin-based modifying polymer.

In a preferred embodiment the nylon is nylon 66.

In another embodiment the filler is a lamellar filler and more preferably is mica.

In a preferred embodiment the container has a wall thickness of from 0.3 to 1.2 mm.

In another embodiment the end closure is a metal can lid attached with a double seamed rim.

In yet another embodiment the container is tubular and has a metal end closure hermetically sealed to each end of said tube.

In yet another embodiment the container has nesting walls and is closed at one end, the other end being open and having an end closure hermetically sealed thereto.

In a further embodiment the container has a non-metallic moisture barrier layer on at least one of the inside and outside of the container. The moisture barrier layer is preferably a urethane or polyvinylidene chloride coating.

In another aspect of the invention food or beverage is packaged and prepared in a hermetically sealed plastic-bodied container by :

a) placing the food or beverage in a plastic-bodied container, said container having walls and a bottom joined to said walls; and

b) lidding the plastic-bodied container with an end closure such that the seal between the container and the end closure is hermetic, to form a shelf stable, food or beverage package; said plastic-bodied container being injection moulded or injection blow moulded and made from a blend comprising a) from 60 to 99 wt.% of a nylon from the group consisting of i) a nylon made from an aliphatic dicarboxylic acid and an aliphatic diamine, each having from 6 to 24 carbon atoms, ii) a nylon made from an aliphatic aminoacid having from 6 to 24 carbon atoms, iii) an amorphous nylon and iv) mixtures thereof, and b) from 1 to 40 wt.% of a filler and optionally up to 20 wt.% of a compatibilized olefin-based modifying polymer.

Preferably the filler is a lamellar filler and more preferably is mica.

In a preferred embodiment the container has a wall thickness of from 0.3 to 1.2 mm.

In another embodiment the end closure is metal.

In another embodiment the container is tubular and the bottom has a metal end closure hermetically sealed thereto.

In yet another embodiment the container has nesting walls and the bottom is integral with said walls.

In a preferred embodiment food is packaged and prepared in a hermetically sealed plastic-bodied can by :

a) placing food in a retortable plastic-bodied can;

b) lidding the plastic-bodied can with an end closure such that the seal between the can and the end closure is hermetic, to form a shelf stable, retortable food package; and

c) retorting the food package, and thereafter cooling the food package; said plastic-bodied can being injection moulded or injection blow moulded and made from a blend comprising a) from 60 to 99 wt.% of a nylon from the group consisting of i) a nylon made from an aliphatic dicarboxylic acid and an aliphatic diamine, each having from 6 to 24 carbon atoms, ii) a nylon made from an aliphatic aminoacid having from 6 to 24 carbon atoms, iii) an amorphous nylon and iv) mixtures thereof, and b) from 1 to 40 wt.% of a filler and optionally up to 10 wt.% of a compatibilized olefin-based modifying polymer.

In a further embodiment the can has a moisture barrier layer on at least one of the inside and outside of the can. The moisture barrier layer is preferably a urethane or polyvinylidene chloride coating, which may be applied by dipping or other known processes.

The filler may be fibrous inorganic fillers, e.g. glass fibres; fibrous organic fillers, e.g. aramid fibres; powdered fillers, e.g. kaolin, fused quartz, calcium carbonate; siliceous fillers, e.g. glass beads, hollow glass spheres; lamellar fillers, e.g. talc, mica. The filled nylon must be able to withstand the operating conditions of the food package preparation process and subsequent storage and transportation. The lamellar fillers are much preferred because they substantially improve the heat distortion characteristics of the injection moulded or injection blow moulded containers and make the containers particularly suitable for retorting. The lamellar filler should preferably have a largest dimension (hereinafter referred to as "diameter") of less than about 150 μm and a minimum particle diameter to particle thickness ratio (otherwise referred to as the aspect ratio) of about 20:1. It is preferable that the aspect ratio be as large as practical, e.g. as large as 50:1 to 100:1. Wet ground mica is the preferred filler, having a mesh size between 60 and 325 U.S. sieve (between 250 μm and 45μm), particularly between 200 and 325 U.S. sieve (between 75 μm and 45μm). Suitable grades of mica are sold under the trade marks Alsibronze 12 and Huber WG-1. The fillers may be added in amounts of 1 to 40 wt.% of the blend, preferably in amounts of 10 to 30 wt.%.

The compatibilized olefin-based polymers may be olefin-based polymers having polar groups attached thereto which allow the olefin-based polymer and the nylon to be blended without phase separation. Such compatibilized olefin-based polymers may be in the form of so-called graft copolymers. The compatibilized olefin-based polymers may also be mixtures of compatibilized olefin-based polymers and olefin-based polymers which are not compatibilized. Examples of such non-compatibilized polymers include homopolymers of ethylene or propylene, copolymers of ethylene and $C_4$ to $C_{10}$ alpha-olefins, polyisobutylene and poly(4-methylpentene-1). Examples of compatibilized olefin-based polymers include copolymers of ethylene and unsaturated carboxylic acid or ester monomers, e.g. ethylene/vinyl acetate copolymers, ethylene/methylacrylate copolymers, ethylene/ethylacrylate copolymers, ethylene/n-butylacrylate copolymers, ethylene/methacrylate copolymers, ethylene/methacrylic acid copolymers, and partially neutralized ethylene/methacrylic copolymers (ionomers), hydrocarbon alpha-olefins grafted with unsaturated carboxylic acids or unsaturated anhydrides, e.g. ethylene/acrylate ester copolymer grafted with unsaturated carboxylic acid or unsaturated anhydrides, ethylene/vinyl acetate copolymers grafted with unsaturated carboxylic acids or unsaturated anhydrides, ethylene/$C_4$ to $C_{10}$ alpha-olefin copolymers grafted with unsaturated carboxylic acids or unsaturated anhydrides, ethylene homopolymers grafted with unsaturated carboxylic acids or unsaturated anhydrides. The preferred unsaturated carboxylic acid is maleic acid and the preferred unsaturated anhydride is maleic anhydride.

Useful concentrations of such olefin-based polyolefin modifying materials fall within the range of 1-20 wt.% of the blend, with up to 10 wt.% being preferred, especially for retortable containers. Many of the olefin-based polymer modifying materials may be added to improve the toughness of the containers, e.g. polyethylene grafted with maleic anhydride, or to improve impact resistance, e.g. ethylene/methacrylic acid copolymers. Incompatible olefin-based polymers may also be added provided that there is sufficient quantity of a compatibilized olefin-based polymer present to prevent phase separation of the nylon and the olefin-based polymers. For example, small amounts of ionomer, e.g. up to about 5 wt.% of the blend, may be added in order to assist in compatibilizing the polyolefin and the nylon. For convenience, however, a graft copolymer as the sole compatibilized olefin-based polymer is preferred.

Ionomer modifying materials, as the compatibilized olefin-based polymer, in the amount of 1-20 wt.% of the blend tend to make the containers flexible and tough. Zinc ionomers are preferred. However, at high temperatures, e.g. about 230½C, such containers tend to become less rigid. Stiffness of such ionomer-modified containers may be improved by the addition of inorganic mineral or siliceous fillers, e.g. talc, glass bubbles, kaolin and mica.

In addition, pigments or dyes may be added for aesthetic effect. In particular, titanium dioxide may be added for whiteness. Other pigments may be added for their colour appeal. Antioxidant, e.g. 1,3,5-trimethyl-2,4,6-tris(3,5-di-tertbutyl-4-hydroxybenzyl)benzene, heat stabilizers, e.g. copper salts, processing aids and the like may also be added as are known in the art.

An especially preferred nylon is nylon 66 having a relative viscosity (RV) in the range of 25 to 250, particularly 40 to 85 and more particularly 45 to 60. Relative viscosity is the ratio of viscosity at $25\frac{1}{2}C$ of an 8.4 wt.% solution of nylon in 90 wt.% formic acid (90 wt.% acid to 10 wt.% water) to the viscosity at $25\frac{1}{2}C$ of the 90 wt.% formic acid alone. The nylon may be a blend of nylons, e.g. nylon 66 having a relative viscosity of 50 and nylon 66 having a relative viscosity of 200. The nylon may also be a blend of different nylons e.g. nylon 6 and nylon 66.

The nylon may also contain small quantities of antioxidants, thermal stabilizers, lubricants, release agents, flow modifiers and the like. The specific modifying material chosen will depend on the end-use requirements.

The container has a shaped lip at each open end of the container, the purpose of which is to provide a means for attaching an end closure, which may also be referred to as a lid, to the container. Most preferably the end closure is of metal, usually of the screw top-type or of the can closure-type. As will be apparent the shaped lip will need to have a screw thread if the lid is to be a screw top. The lip will have a shape and thickness suitable for bending into a so-called body hook if the lid is to be attached in a double seaming process. Attachment of the metal lids is by mechanical means known in the art, e.g. the can closure type may be attached by a double seaming process.

In the case of can-type containers it is preferred that the containers be nestable for ease of transportation of the unfilled containers. The walls are most often relatively long compared to a cross sectional dimension of the bottom of the container.

The container may be injection moulded or injection blow moulded by known methods. With injection moulding the whole of the plastic portion of the container is moulded using an injection moulding machine. With injection blow moulding the "neck" portion of the container is injection moulded and the remainder of the container is blow moulded in a second moulding step with a blow moulding machine. The selection of thickness of the container depends in part upon the size of the container and in part upon the composition of the material from which the container is to be injection moulded and the degree of shelf stability required.

Merely from a structural standpoint, it will be clear, that, for a given composition and container design, the thicker the container the stiffer and tougher will be the container. It will also be appreciated, however, that the thicker the container, the heavier and more costly to produce it will be.

In use, a preferred embodiment is one in which the walls and bottom of the container are injection moulded integrally.

With respect to packaging of food the container is filled with the foodstuff and subsequently lidded with a hermetically sealed end closure, preferably with a high speed double seaming can lidding process as is known in the art. The food package so formed is then retorted in an oven, the temperature and time of retorting being dependent on the amount and type of food present in the lidded container. Typically the food package is retorted for 30-60 min. at temperatures of about $115\frac{1}{2}C$ ($239\frac{1}{2}F$) to $150\frac{1}{2}C$ ($302\frac{1}{2}F$). The package is then cooled in a known manner and readied for shipping to customers.

A particular advantage of the container of the present invention is that there is little waste formed in the injection moulding or injection blow moulding process. Additionally, in the case where the plastic is homogeneous, e.g. without coating layers, if there is a need to recycle any defective containers the fact that the plastic is homogeneous allows it to be remoulded or ground up and blended in with virgin material and moulded into new containers. Although it is known that nylons have moderately good oxygen barrier characteristics when the nylon is dry it is surprising that these containers, when filled with water-bearing foods, retain sufficient oxygen barrier properties. For example a container of 1.016 mm in thickness and made from 80 wt.% nylon 66 having a relative viscosity of 42 and 20 wt.% mica has an oxygen permeability, at 23° C, of 0.20 ml/m$^2$.day.atm. at a relative humidity of 0 %, and still has an oxygen permeability of 0.14 ml/m$^2$.day.atm. at a relative humidity of 100 %. Shelf life studies of the food-filled containers suggest that such a level of permeability is sufficient to extend the shelf life of the retorted packages. As used herein the term "shelf stable" means a food package which may be stored under ambient conditions for at least about six months. Higher concentrations of lamellar fillers, e.g. mica, may extend the shelf life longer, e.g. to 1 or 2 years. For certain types of food it may be desirable to have even better oxygen barrier than the nylon may provide at the thicknesses economically feasible. In such instances the container may be coated on the inside or outside with a further oxygen barrier layer, e.g. polyvinylidene chloride. In the case where the whole of the container is injection moulded the oxygen barrier layer may be provided by laminating films to the nylon in the injection moulding process.

Although the above description is particularly directed to retorted foods, the container of the present invention may also be used for beverages, e.g. soft drinks.

The present invention may be illustrated by the following examples:

EXAMPLE I

A composition consisting of 76.9 wt.% nylon 66, 20.0 wt.% 325 mesh mica, 0.1 wt.% zinc stearate and 3.0 wt.% titanium dioxide was melt-blended and extruded into pellet form. The pellets were then injection moulded, using a Toshiba (trade mark) ISE 250, 250 ton injection moulding machine, into circular (handleless) cup-shaped containers, each having a bottom 6.35 cm in diameter, an open top 8.38 cm in diameter and walls 6.89 cm in height. The containers were then filled with 240 g of chile con carne, the filled containers being lidded with aluminium full panel opening end closures by a double seam process using a Dixie Canner (trade mark) Model UV can closing machine. The lidded containers were then retorted at $121\frac{1}{2}$C for 60 min.

**Claims**

1. An injection moulded or injection blow moulded food or beverage container adapted to have one or two end closures hermetically sealed thereto, said container being made from a blend comprising a) from 60 to 99 wt % of one or more of i) a nylon made from an aliphatic dicarboxylic acid and an aliphatic diamine, each having from 6 to 24 carbon atoms, ii) a nylon made from an aliphatic amino acid having from 6 to 24 carbon atoms and iii) an amorphous nylon, and b) from 1 to 40 wt % of a filler and, optionally, c) up to 20 wt % of a compatibilized olefin-based modifying polymer.

2. A container according to claim 1 wherein the nylon is nylon 66.

3. A container according to claim 1 or claim 2 wherein the filler is a lamellar filler.

4. A container according to claim 3 wherein the filler is mica.

5. A container according to any one of the preceding claims wherein the container has a wall thickness of from 0.3 to 1.2 mm.

6. A container according to any one of the preceding claims wherein a compatibilized olefin-based polymer is present and is a copolymer of ethylene and unsaturated carboxylic acid or ester monomer or a hydrocarbon alpha-olefin grafted with unsaturated carboxylic acid or unsaturated anhydride.

7. An injection moulded or injection blow moulded food or beverage container according to claim 6 wherein the compatibilized olefin-based polymer is an ethylene/vinyl acetate copolymer, ethylene/methylacrylate copolymer, ethylene/ethylacrylate copolymer, ethylene/n-butylacrylate copolymer, ethylene/methacrylate copolymer, ethylene/methacrylic acid copolymer, partially neutralized ethylene/methacrylic copolymer, ethylene/acrylate ester copolymer grafted with unsaturated carboxylic acid or unsaturated anhydride, ethylene/vinyl acetate copolymer grafted with unsaturated carboxylic acid or unsaturated anhydride, ethylene/$C_4$ to $C_{10}$ alpha-olefin copolymer grafted with unsaturated carboxylic acid or unsaturated anhydride, or ethylene homopolymer grafted with unsaturated carboxylic acid or unsaturated anhydride.

8. A container according to any one of the preceding claims wherein the container is an injection moulded tube and is adapted to have a metal end closure hermetically sealed to each end of the tube.

9. A container according to any one of claims 1 to 7 wherein the container is injection moulded, has nesting walls and is closed at one end, the other end being open and adapted to have a metal end closure hermetically sealed thereto.

10. A shelf stable food or beverage package consisting of food or beverage contained in a plastic-bodied container as claimed in any one of the preceding claims, with each open end having an end closure hermetically sealed thereto.

11. A process for packaging and preparing food or a beverage in a hermetically sealed plastic-bodied container comprising:
a) placing the food or beverage in the plastic-bodied container, said container having walls and a bottom joined to said walls; and
b) lidding the plastic-bodied container with an end closure such that the seal between the container and the end closure is hermetic, to form a shelf stable food or beverage package;
the plastic-bodied container being as claimed in any one of claims 1 to 9.

12. A process according to claim 11 wherein the container walls are injection moulded and tubular and the bottom is formed by a metal end closure hermetically sealed to.

13. A process according to claim 11 or claim 12 for packaging and preparing food in a hermetically sealed plastic-bodied can comprising:
a) placing the food in the plastic-bodied container, the body having walls and the container having a bottom joined to the walls;

b) lidding the plastic-bodied can with an end closure such that the seal between the can and the end closure is hermetic, to form a shelf stable food package;

c) retorting the food package and thereafter cooling the food package.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 231 663 (DU PONT CA) * Claims 1-13; page 4, line 42 * | 1-4,6,8 | C 08 K 3/34 C 08 L 77/00 C 08 L 77/02 B 65 D 6/02 |
| X | EP-A-0 229 527 (DU PONT CA) * Claims 1-9 * | 1-4,6,8 | |
| Y | US-A-4 120 932 (ROTH) * Claims 1,2,5,7,9,10 * | 1-13 | |
| Y | CHEMICAL ABSTRACTS, vol. 79, no. 10, 10 September 1973, page 53, abstract no. 54478m, Columbus, Ohio, US; K. KOMATSU et al.: "Molding techniques and product quality of polyolefin/nylon composite bottles", & JAP. PLAST. AGE 1973, 11(6), 17-21 * Abstract * | 1-13 | |

TECHNICAL FIELDS SEARCHED (Int. Cl.5)

C 08 L
C 08 K
B 65 D

The present search report has been drawn up for all claims

| Place of search | Date of completion of the search | Examiner |
|---|---|---|
| THE HAGUE | 19-01-1990 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)